# EUROPÄISCHE PATENTSCHRIFT

(11) **EP 0 965 018 B1**
(45) Veröffentlichungstag und Bekanntmachung des Hinweises auf die Patenterteilung: **12.12.2001**
(21) Anmeldenummer: 97949914.2
(22) Anmeldetag: 12.11.1997
(51) Int. Cl.: F21V 8/00

(54) **BELEUCHTUNGSEINHEIT**
LIGHTING UNIT
UNITE D'ECLAIRAGE

(30) Priorität: 06.03.1997 DE 19709268
(43) Veröffentlichungstag der Anmeldung: 22.12.1999
(73) Patentinhaber: ROBERT BOSCH GMBH, 70442 Stuttgart (DE)
(72) Erfinder: HEINMÜLLER, Christina, D-70182 Stuttgart (DE); HAAS, Gunther, D-71229 Leonberg (DE)
(86) Internationale Anmeldenummer: DE9702650
(87) Internationale Veröffentlichungsnummer: WO9839598

(56) Entgegenhaltungen:
- WO-A-94/20871
- FR-A- 2 720 181
- US-A- 2 646 637

## Beschreibung

### Stand der Technik

Die Erfindung geht aus von einer Beleuchtungseinheit nach der Gattung des unabhängigen Anspruchs.

Aus der unveröffentlichten deutschen Patentanmeldung mit dem Aktenzeichen 196 52 209.9 ist schon eine Beleuchtungseinheit bekannt. Die Beleuchtungseinheit weist eine flache Wellenleiterplatte auf, die aus einem transparenten Kunststoffmaterial gefertigt ist. An einer Stirnseite der Wellenleiterplatte ist eine zylindrische Kaltkathodenlampe angebracht. Mittels eines Reflektors wird das von der Lampe ausgestrahlte Licht über die Stirnseite in den Lichtwellenleiter eingekoppelt. Auf der Unterseite des plattenförmigen Lichtleiters sind Prismen angebracht, durch welche das Licht auf die obere Fläche des plattenförmigen Lichtleiters reflektiert wird, wo sie unter relativ kleinem Einfallswinkel auftreffen. Durch den relativ kleinen Einfallswinkel wird Totalreflexion verhindert und das Licht tritt aus.

Aus der FR 2 720 181 A1 ist eine Beleuchtungsvorrichtung bekannt, die über zwei keilförmige, benachbart angeordnete Lichtleiterplatten verfügt, die optisch voneinander getrennt angeordnet sind. Es werden zwei verschiedene Anzeigen hinterleuchtet, die an zwei verschiedenen, gegenüberliegenden Oberflächen der Einheit aus den beiden Lichtleiterplatten angeordnet sind. Aus der US 2,646,637 ist eine aus zwei Keilen gebildete Lichtleiterplatte bekannt, bei der die beiden Keile über eine aufgerauhte Oberfläche verbunden und von zwei Seiten beleuchtbar sind, um eine gleichförmige Beleuchtung einer Oberfläche der durch die Keile gebildeten Lichtleiterplatte zu gewährleisten.

Derartige Beleuchtungseinheiten finden ihren Einsatz vorzugsweise beim Bau von Flüssigkristallanzeigen. Hierbei wird eine Flüssigkristallzelle über der Lichtaustrittsfläche der
Beleuchtungseinheit angebracht. Die Flüssigkristallzelle besteht aus zwei Glasplatten, welche durch einen dünnen Spalt voneinander getrennt sind. In diesem Spalt befindet sich der Flüssigkristall, welcher je nach angelegter Spannung einen anderen kristallographischen Ordnungszustand aufweist und daraus folgende optische Eigenschaften.

Zusätzlich zum oben beschriebenen Aufbau kommen in einer Flüssigkristallanzeige noch verschieden Folie oder Beschichtungen zum Einsatz, welche Eigenschaften des von der Beleuchtungseinheit ausgesandten Lichts ändern, wie beispielsweise Farbe, Polarisation oder Kollimation. Solche Folien und Beschichtungen sind beispielsweise aus der oben zitierten Anmeldeschrift bekannt.

Flüssigkristallzellen finden auch zunehmenderweise Anwendung im Kraftfahrzeugbereich. Beispielsweise ist eine Flüssigkristallanzeige bekannt, welche in der Mittelkonsole angebracht ist, welche sowohl zur Wiedergabe von Informationen aus einem Navigationssystem als auch zur Wiedergabe von Fernsehfilmen dient. Die Anzeige nach dem Stand der Technik besitzt jedoch eine fest eingestellte und Bauart bedingte Blickwinkelabhängigkeit, so daß dem Fahrer und dem Beifahrer beispielsweise dieselbe Information angeboten wird.

### Vorteile der Erfindung

Die erfindungsgemäße Beleuchtungseinheit mit den kennzeichnenden Merkmalen des Hauptanspruchs hat demgegenüber den Vorteil, daß mit ihrer Hilfe eine Flüssigkristallanzeige herstellbar ist, welche für mehrere Benutzer, welche aus verschiedenen Blickwinkeln die Anzeige betrachten, individuell optimiert werden kann. Durch die in den abhängigen Ansprüchen aufgeführten Maßnahmen sind vorteilhafte Weiterbildungen und Verbesserungen der im unabhängigen Anspruch angegebenen Beleuchtungseinheit möglich. So ist es besonders vorteilhaft, das in die erste Wellenleiterplatte einkoppelbare Licht und in die zweite Wellenleiterplatte einkoppelbare Licht getrennt ein- und ausschalten zu können, da somit beispielsweise bestimmte Informationen nur dem einen oder nur dem anderen Betrachter angeboten werden können. Beispielsweise kann für Anwendungen im Kraftfahrzeugbereich die Anzeige im Fernsehmodus nur für den Beifahrer sichtbar sein, im Anzeigemodus für technische Parameter nur für den Fahrer, und im Navigationsmodus für beide.

Durch die Anordnung von Prismen auf der Wellenleiterplatte erhöht sich die Effizienz der Beleuchtungseinheit, da somit die Auskopplung erleichtert wird.

Durch das Anordnen von mehr oder größeren Prismen in den Bereichen der Wellenleiterplatte, in welchen die Lichtintensität geringer ist, ergibt sich in vorteilhafter Weise, daß die Auskopplungseffizienz dort größer ist, wo die Lichtintensität in der Wellenleiterplatte geringer ist. Somit ergibt sich eine gleichmäßig Verteilung des aus der Wellenleiterplatte ausgekoppelten Lichts, wodurch sich eine sehr homogene Beleuchtung der Flüssigkristallzelle ergibt.

Schließlich ist es besonders vorteilhaft, die Wellenleiterplatte, welche von der Flüssigkristallzelle weiter entfernt ist mit stärkeren oder mehr Lampen zu versehen, da das von dieser Wellenleiterplatte ausgestrahlte Licht notwendigerweise zuerst durch die andere Wellenleiterplatte hindurchtreten muß und hierbei teilweise absorbiert wird, also für die Beleuchtung der Flüssigkristallzelle verlorengeht.

### Zeichnung

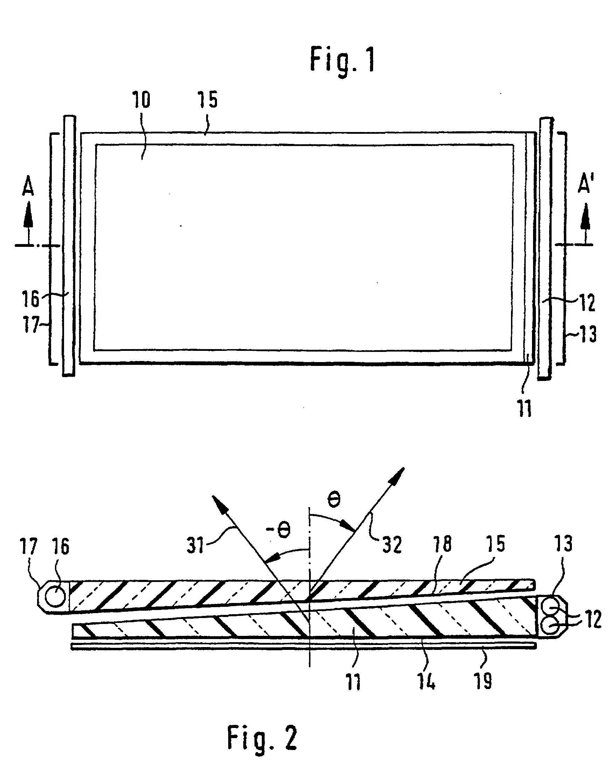

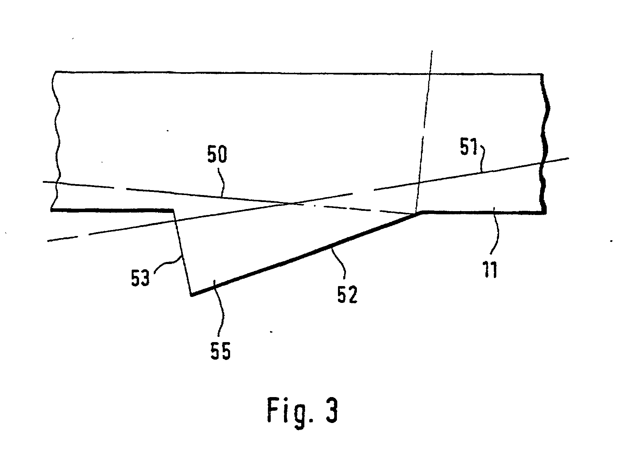

Ein Ausführungsbeispiel der Erfindung ist in der Zeichnung dargestellt und in der nachfolgenden Beschreibung näher erläutert. Es zeigen Figur 1 eine erfindungsgemäße Beleuchtungseinheit, Figur 2 einen Querschnitt durch die Beleuchtungseinheit aus Figur 1. Figur 3 zeigt einen Ausschnitt aus einem Querschnitt durch eine Wellenleiterplatte.

### Beschreibung des Ausführungsbeispiels

Figur 1 zeigt eine erfindungsgemäße Beleuchtungseinheit in Aufsicht. Die Beleuchtungseinheit weist eine zweite Wellenleiterplatte 15 auf, 1 welche aus einem transparenten Material, beispielsweise Plexiglas, gefertigt ist und im wesentlichen eine Keilform mit einem rechteckigen Grundriß aufweist. In Aufsicht ist nur der rechteckige Grundriß erkennbar. An einer Stirnseite der zweiten Wellenleiterplatte 15 ist eine zweite Lampe 16 angeordnet. Die zweite Lampe 16 ist als zylinderförmige Kaltkathodenlampe ausgebildet und ist so angeordnet, daß sie den größten Teil der Stirnfläche der zweiten Wellenleiterplatte 15 bedeckt. Auf der Seite der Lampe 16, welche von der zweiten Wellenleiterplatte 15 abgewandt ist, befindet sich ein Reflektor 17. Unterhalb der zweiten Wellenleiterplatte 15 ist eine erste Wellenleiterplatte 11 angeordnet, von welcher in der Aufsicht nur ein schmaler Streifen zu sehen ist. Die erste Wellenleiterplatte 11 und die zweite Wellenleiterplatte 15 weisen eine sehr ähnliche Form auf, die erste Wellenleiterplatte 11 ist jedoch um 180° um ihre Hochachse gedreht angeordnet. An einer Stirnseite der ersten Wellenleiterplatte 11 ist eine erste Lampe 12 angeordnet, welche ebenfalls als zylinderförmige Kaltkathodenlampe ausgebildet ist.

In Figur 2 ist ein Querschnitt durch die in Figur 1 dargestellte Beleuchtungseinheit entlang der Schnittlinie AA' dargestellt, wobei gleiche Bestandteile mit gleichen Bezugszeichen versehen wurden. Die Beleuchtungseinheit weist eine erste Wellenleiterplatte 11 auf, deren keilförmiger Querschnitt in der in Figur 2 gewählten Darstellung deutlich sichtbar ist. Die erste Wellenleiterplatte 11 ist auf der unteren Fläche mit einem Prismenfilm 14 versehen, durch welchen das Auskoppeln von Licht aus der Wellenleiterplatte erreicht wird. An der Stirnseite, an welcher die erste Wellenleiterplatte 11 die größte Dicke aufweist, ist eine erste Lampe 12 angebracht. Aus der Schnittzeichnung ist erkennbar, daß die erste Lampe 12 nicht aus einem zylindrischen Körper besteht, sondern aus zwei übereinander angeordneten zylindrischen Körpern. Die erste Lampe 12 wird auf der der ersten Platte 11 abgewandten Seite von einem ersten Reflektor 13 umfaßt. Unter der unteren Fläche der ersten Wellenleiterplatte 11 befindet sich eine Absorberschicht 19. Über der ersten Wellenleiterplatte 11 befindet sich eine zweite Wellenleiterplatte 15, welche ebenfalls einen in etwa keilförmigen Querschnitt aufweist. Auf der Unterseite der zweiten Wellenleiterplatte 15 befindet sich ein zweiter Prismenfilm 18, der in etwa gleich ausgebildet ist wie der erste Prismenfilm 14. Entlang der dicksten Stirnfläche der zweiten Wellenleiterplatte 15 ist eine Lampe 16 angebracht, welche als in etwa zylinderförmige Kaltkathodenlampe ausgebildet ist. Die zweite Lampe 16 wird auf den der Stirnseite der zweiten Wellenleiterplatte 15 abgewandten Seiten von einem Reflektor 17 umfaßt.

Im in Figur 2 gezeigten Ausführungsbeispiel sind die erste Wellenleiterplatte und die zweite Wellenleiterplatte so übereinander angebracht, daß die höchste Stirnseite der ersten Wellenleiterplatte 14 unter der niedrigsten Stirnseite der zweiten Wellenleiterplatte 15 zu liegen kommt und umgekehrt. Dies ist besonders vorteilhaft, um somit besonders kleine Außenabmessungen zu erhalten und darüber hinaus eine in etwa quaderförmige Außenform zu erreichen. Dies ist jedoch nicht erfindungswesentlich.

Licht, welches von der ersten Lampe 12 ausgesandt wird, verläuft in der ersten Wellenleiterplatte 11 in etwa horizontal, und wird durch Totalreflexion geführt. Der erste Prismenfilm 14 auf der unteren Fläche der ersten Wellenleiterplatte 11 unterbindet die Totalreflexion und lenkt das Licht ab, so daß es durch die obere Fläche mit der ersten Ausbreitungsrichtung 31 ausgekoppelt wird.

Da der zweite Wellenleiter 15 ebenso wie der erste Wellenleiter 11 aus einem transparenten Material besteht, ändert sich die erste Ausbreitungsrichtung 31 in erster Näherung nur unwesentlich, wenn sie den zweiten Wellenleiter 15 durchdringt: Licht, welches von der zweiten Lampe 16 in den zweiten Wellenleiter 15 eingekoppelt wird, bewegt sich anfangs ebenso in horizontaler Richtung und wird ebenfalls durch Totalreflexion geführt. Bedingt durch den zweiten Prismenfilm 18 wird jedoch auch das von der zweiten Lampe 16 abgestrahlte Licht durch die obere Fläche des zweiten Wellenleiters 15 ausgekoppelt und breitet sich sodann mit der zweiten Ausbreitungsrichtung 32 aus. Vor allem bedingt durch den Winkel zwischen der unteren Fläche des ersten Wellenleiters 11 und der unteren Fläche des zweiten Wellenleiters 15, zeigen die erste Ausbreitungsrichtung 31 und die zweite Ausbreitungsrichtung 32 nicht in dieselbe Richtung.

Die in Figuren 1 und 2 gezeigte Beleuchtungseinheit kann zur Hinterleuchtung einer Flüssigkristallzelle herangezogen werden, um somit eine Flüssigkristallanzeige zu bilden. Sowohl ein Beobachter in der gedachten Verlängerung der ersten Ausbreitungsrichtung 31 als auch ein Beobachter in der gedachten Verlängerung der zweiten Ausbreitungsrichtung 32 kann hierbei die Anzeige ablesen. Es ist jedoch auch möglich und vorgesehen, eine der beiden Lampen 16 oder 12 abzuschalten, so daß nur noch einer der beiden Beobachter die Flüssigkristallanzeige ablesen kann. Somit ermöglicht die erfindungsgemäße Beleuchtungseinheit eine Anzeige, welche zwischen zwei Blickwinkeln umschaltbar ist oder erlaubt beide Blickwinkel anzuschalten.

Die Absorberschicht 19 soll hierbei nicht erfindungswesentlich sein. Ebenso ist es möglich und vorstellbar, die Absorberschicht 19 durch eine Spiegelschicht zu ersetzen. Hierdurch ist es sogar möglich, die Effizienz der Beleuchtungseinheit geringfügig zu steigern. Darüber hinaus ist es auch möglich und vorgesehen, die Absorberschicht wegzulassen, wobei hierdurch der Effekt entsteht, daß die Beleuchtungseinheit Licht in eine Richtung abstrahlt, in welcher es nicht notwendig ist. Unter Umständen ist auch zu berücksichtigen, daß hierdurch störendes Streulicht entsteht.

Weiterhin ist zu berücksichtigen, daß Licht an der Stirnfläche, welche derjenigen Stirnfläche, an welcher die Lampe angeordnet ist, gegenüberliegt, reflektiert werden kann. Dieses Licht wird sodann ebenfalls mit Hilfe der Prismen ausgekoppelt und verläßt die Wellenleiterplatte unter einem falschen Winkel. Um diesen Effekt zu vermeiden sind mehrere Möglichkeiten vorgesehen. So kann zum einen die Stirnfläche einer Wellenleiterplatte, welche nicht zum Einkoppeln von Licht herangezogen wird, mit einer Absorberschicht versehen werden, so daß dieser Reflexeffekt verhindert wird. Dies führt jedoch zu einer Senkung der Effizienz der Beleuchtungseinheit. Zum anderen können auch Prismen mit einem asymmetrischen Querschnitt herangezogen werden, welche zwar Licht auskoppeln, welches aus der Richtung der Lampe kommt, jedoch kein Licht auskoppeln, welches in Richtung Lampe läuft.

Dies ist in Figur 3 gezeigt. Figur 3 zeigt den Ausschnitt aus einer Wellenleiterplatte 11, wobei ein erster Lichtstrahl 50 beispielsweise von der Lampe ausgesandt wurde und ein antiparalleler zweiter Lichtstrahl 51 von der gegenüberliegenden Stirnseite reflektiert wurde.

Der erste Lichtstrahl 50 wird von der flachen Flanke 52 des Prismas 55 um etwa 90° abgelenkt, während der zweite Lichtstrahl 51 durch die steile Flanke 53 des Prismas 55 hindurchtritt.

Da das Licht von der ersten Wellenleiterplatte 11 zusätzlich noch die zweite Wellenleiterplatte 15 durchlaufen muß, kann hierdurch eine gewisse Abschwächung der Lichtintensität eintreten. Es ist daher vorteilhaft, wie in Figur 2 gezeigt, für die erste Wellenleiterplatte 11 eine erste Lampe 12 vorzusehen, welche aus zwei Röhren besteht, um diesen Intensitätsverlust auszugleichen. Dies soll jedoch ebenfalls nicht erfindungswesentlich sein.

Zusätzlich ist es vorgesehen, den Prismenwinkel heranzuziehen, um die erste Ausbreitungsrichtung 31 und die zweite Ausbreitungsrichtung 32 festzulegen, da diese Prismenwinkel ebenso Auswirkungen haben wie die genaue Ausbildung des keilförmigen Querschnitts der beiden Wellenleiterplatten. In einer weiteren Ausführungsform ist es vorgesehen, die Umschaltfunktion nur auf einem Teil der Anzeigefläche zu realisieren, indem eine der beiden Wellenleiterplatten kleiner ausgeführt wird, oder in einer anderen Form ausgeführt wird. Beispielsweise ist es möglich, in der eingangs erwähnten Kraftfahrzeuganwendung eine

Anzeige herzustellen, welche in einem Betriebsmodus einen dem Beifahrer zugewandten etwa rechteckigen Fernsehbildschirm erzeugt, und in einem anderen Anzeigebetriebsmodus ein dem Fahrer zugewandtes Rundinstrument anzeigt.

## Patentansprüche

1. Beleuchtungseinheit zur flächigen homogenen Ausleuchtung, insbesondere zur Durchleuchtung einer Flüssigkristallzelle, mit einer ersten Wellenleiterplatte (11) und einer zweiten Wellenleiterplatte (15), wobei die Wellenleiterplatten (11, 15) jeweils wenigstens zwei Deckflächen und mindestens eine Schmalseite aufweisen, wobei an der jeweils wenigstens einen Schmalseite Licht einkoppelbar ist und wobei die erste und die zweite Wellenleiterplatte übereinander angeordnet sind, **dadurch gekennzeichnet, daß** aus einer Deckfläche der ersten Wellenleiterplatte (11) Licht in einer ersten Ausbreitungsrichtung (31) auskoppelbar ist, wobei dieses Licht die zweite Wellenleiterplatte (15) unter einer unwesentlichen Änderung der ersten Ausbreitungsrichtung (31) durchquert, und daß aus einer Deckfläche der zweiten Wellenleiterplatte Licht in einer zweiten Ausbreitungsrichtung (32) auskoppelbar ist, wobei die erste Ausbreitungsrichtung (31) ungleich der zweiten Ausbreitungsrichtung (32) ist und wobei die beiden Ausbreitungsrichtungen auf einer Seite der zweiten Wellenleiterplatte (15) liegen.

2. Beleuchtungseinheit nach einem der vorhergehenden Ansprüche, **dadurch gekennzeichnet, daß** Mittel vorgesehen sind, das in die erste Wellenleiterplatte einkoppelbare Licht auszuschalten.

3. Beleuchtungseinheit nach einem der vorhergehenden Ansprüche, **dadurch gekennzeichnet, daß** Mittel vorgesehen sind, das in die zweite Wellenleiterplatte einkoppelbare Licht auszuschalten.

4. Beleuchtungseinheit nach einem der vorhergehenden Ansprüche, **dadurch gekennzeichnet, daß** eine Deckfläche der ersten Wellenleiterplatte und/oder eine Deckfläche der zweiten Wellenleiterplatte mit einem Prismenfilm (14, 18) aus optischen Prismen (55) versehen ist.

5. Beleuchtungseinheit nach einem der vorhergehenden Ansprüche, **dadurch gekennzeichnet, daß** die optischen Prismen (55) an denjenigen Stellen in der Wellenleiterplatte mit höherer Dichte aufgebracht werden, an denen die Lichtintensität des in der Wellenleiterplatte geführten Lichts geringer ist.

6. Beleuchtungseinheit nach Anspruch 4 oder 5, **dadurch gekennzeichnet, daß** die Prismen (55) mit einer steilen Flanke (53) und einer flachen Flanke (52) versehen sind.

## Claims

1. Lighting unit for flat homogeneous illumination, in particular for transluminating a liquid crystal cell, having a first optical conductor plate (11) and a second optical conductor plate (15), the optical conductor plates (11, 15) in each case having at least two top surfaces and at least one narrow side, it being possible for light to be launched at the respective at least one narrow side, and the first and the second optical conductor plates being arranged one above another, **characterized in that** light can be output from a top surface of the first optical conductor plate (11) in a first propagation direction (31), this light traversing the second optical conductor plate (15) with an insubstantial change to the first propagation direction (31), and **in that** light can be output from a top surface of the second optical conductor plate in a second propagation direction (32), the first propagation direction (31) being different from the second propagation direction (32), and the two propagation directions being situated on one side of the second optical conductor plate (15).

2. Lighting unit according to one of the preceding claims, **characterized in that** means are provided for cutting out the light which can be launched into the first optical conductor plate.

3. Lighting unit according to one of the preceding claims, **characterized in that** means are provided for cutting out the light which can be launched into the second optical conductor plate.

4. Lighting unit according to one of the preceding claims, **characterized in that** a top surface of the first optical conductor plate and/or a top surface of the second optical conductor plate is/are provided with a prismatic film (14, 18) made from optical prisms (55).

5. Lighting unit according to one of the preceding claims, **characterized in that** the optical prisms (55) are applied at those points of higher density in the optical conductor plates at which the light intensity of the light guided in the optical conductor plate is lower.

6. Lighting unit according to Claim 4 or 5, **characterized in that** the prisms (55) are provided with a steep edge (53) and a shallow edge (52).

## Revendications

1. Unité d'éclairage pour produire un éclairage homogène en surface, en particulier pour éclairer une cellule à cristaux liquides, comprenant une première (11) et une seconde (15) plaque guide d'ondes, ces plaques (11, 15) présentant chacune deux faces de couverture et au moins un côté étroit, une lumière pouvant être accouplée à au moins un côté étroit, et la première et la seconde de ces plaques étant disposées l'une sur l'autre,
**caractérisée en ce que**
- d'une surface de couverture de la première plaque guide d'ondes (11) la lumière peut être extraite dans une première direction de propagation (31), cette lumière traversant ensuite la seconde plaque guide d'ondes (15) sans s'écarter sensiblement de la première direction de propagation (31), et
- d'une surface de couverture de la seconde plaque guide d'ondes la lumière peut être extraite dans une seconde direction de propagation (32), qui n'est pas la même que la première (31), les deux directions se trouvant sur un côté de la seconde plaque guide d'ondes (15).

2. Unité d'éclairage selon la revendication 1,
**caractérisée en ce que**
des moyens sont prévus pour éteindre la lumière pouvant être injectée dans la première plaque guide d'ondes.

3. Unité d'éclairage selon l'une des revendications précédentes,
**caractérisée en ce que**
des moyens sont prévus pour éteindre la lumière pouvant être injectée dans la seconde plage guide d'ondes.

4. Unité d'éclairage selon l'une quelconque des revendications précédentes,
**caractérisée en ce qu'**
une surface de couverture de la première plaque guide d'ondes et/ou une surface de couverture de la seconde plaque guide d'ondes est équipée d'un film à prismes (14, 18) composé de prismes optiques (55).

5. Unité d'éclairage selon l'une quelconque des revendications précédentes,
**caractérisée en ce que**
les prismes optiques (55) sont placés sur la plaque guide d'ondes en densité plus élevée aux endroits où l'intensité de la lumière circulant à l'intérieur de la plaque guide d'ondes est plus faible.

6. Unité d'éclairage selon la revendication 4 ou 5,
**caractérise en ce que**
les prismes (55) présentent une face fortement inclinée (53) et une face peu inclinée (52).
